# EUROPÄISCHE PATENTSCHRIFT

(11) **EP 0 789 139 B1**
(45) Veröffentlichungstag und Bekanntmachung des Hinweises auf die Patenterteilung: **14.03.2001**
(21) Anmeldenummer: 96115093.5
(22) Anmeldetag: 20.09.1996
(51) Int. Cl.: B60K 5/12, F02B 63/04, H02K 7/18

(54) **Brennkraftmaschine mit einem angeflanschten Generator**
Combustion engine with flanged generator
Moteur à combustion associé associé par une flasque

(30) Priorität: 27.09.1995 DE 19535942
(43) Veröffentlichungstag der Anmeldung: 13.08.1997
(73) Patentinhaber: DEUTZ Aktiengesellschaft, 51063 Köln (DE)
(72) Erfinder: Hitziger, Hubert, Dr.-Ing., 67549 Worms (DE)
(74) Vertreter: Nau, Walter, Dipl.-Ing.

(56) Entgegenhaltungen:
- EP-A- 0 348 253
- DE-A- 3 035 943
- DE-A- 3 334 429
- DE-A- 3 809 568
- DE-A- 4 433 281
- DE-U- 7 932 802
- DE-U- 8 334 714

## Beschreibung

Die Erfindung betrifft eine Brennkraftmaschine mit einem Aggregat, insbesondere selbstzündende Brennkraftmaschine, die ein Kurbelgehäuse aufweist, in dem eine Kurbelwelle drehbar gelagert ist, an der zumindest ein einen Kolben tragendes Pleuel angelenkt ist, wobei der Kolben in einem von einem Zylinderkopf abgedeckten Zylinder bewegbar ist, wobei weiterhin das Kurbelgehäuse kurbelwellenseitig von einer Ölwanne verschlossen ist, und von der Kurbelwelle das Aggregat angetrieben wird, wobei die Brennkraftmaschine und das Aggregat über Lager auf einem Untergrund aufstellbar sind, wobei die Lager stirnseitig der Brennkraftmaschine und endseitig dem Aggregat an deren voneinander wegweisenden Endbereichen angeordnet sind.

Eine derartige Brennkraftmaschine ist aus der DE-A 33 34 429 bekannt. Diese Brennkraftmaschine ist mit einem speziellen Zwischengehäuse mit einem Generator zur Stromerzeugung verflanscht. Gelagert ist die Kombination von Verbrennungsmotor und Generator auf einem gemeinsamen, stabilen Trägerpaar, das zur verbindungssteifen Anordnung notwendig ist. Dadurch wird sowohl das Gewicht als auch der Bauraumbedarf der Anlage erhöht.

Die weiterhin bekannte EP-A-0 348 253 betrifft die gemeinsame Anordnung einer Brennkraftmaschine und eines Kraftfahrzeuggetriebes in einem Pkw, wobei die Brennkraftmaschine und das angeflanschte Getriebe in üblicher Art und Weise in der Karosserie gelagert sind und eine sebsttragende Einheit bilden. Zusätzlich sind Moment-Abstützarme vorhanden, die bei plötzlichen Lastwechseln die Brennkraftmaschine und das Getriebe sicher in der vorgegebenen Position halten.

Der Erfindung liegt die Aufgabe zugrunde, eine Brennkraftmaschine mit einem von der Kurbelwelle angetriebenen Aggregat bereitzustellen, bei der die Lagerung einerseits einen geringen Bauaufwand verursacht, andererseits zuverlässig und den unterschiedlichsten Bedürfnissen hinsichtlich der Kombination Brennkraftmaschine/Aggregat genügt.

Diese Aufgabe wird dadurch gelöst, dass die Brennkraftmaschine und das Aggregat eine selbsttragende Einheit bilden und dass die Ölwanne als tragendes Element ausgebildet ist. Durch die Ausbildung als selbsttragende Einheit entfällt der sonst bei derartigen Baueinheiten übliche und notwendige Aggregaterahmen oder Träger. Dieser Aggregaterahmen oder Träger muß bei konventionellen Baueinheiten entsprechend verwindungssteif ausgebildet sein, um die gemeinsame Lagerung und gegenseitige Ausrichtung von Brennkraftmaschine und angetriebenem Aggregat zu gewährleisten. In den Fällen, in denen bisher auf einen derartigen Aggregaterahmen oder Träger verzichtet werden kann, ist das Aggregat im Vergleich zu der Brennkraftmaschine so klein und leicht, dass eine alleinige Lagerung nur der Brennkraftmaschine ausreichend ist. In diesem Fall tritt aber auch das durch die vorliegende Erfindung gelöste Problem nicht auf, da dann in das Aggregat keine die Baueinheit belastende Lagerkräfte eingeleitet werden. Durch die Ausbildung als tragende Einheit und stirnseitige und endseitige Anordnung von Lagern an dieser Baueinheit kann diese ohne weiteres bei entsprechender Standfestigkeit des Untergrunds und entsprechender Anordnung von Standfüßen unter den Lagern auf beliebigem Untergrund aufgestellt werden. Dabei ist diese Baueinheit durch den Wegfall des Aggregaterahmens oder Trägers erheblich leichter als konventionelle Ausführungen, so dass beispielsweise bei einem mobilen Einsatz das Transportproblem leichter lösbar ist. Weiterhin ist die Ölwanne als tragendes Element ausgebildet. Dadurch kann mit einfachen Mitteln eine Verstärkung der Brennkraftmaschine erreicht werden, so dass diese insgesamt bei nur einem geringen Gewichtsaufwand insgesamt steifer ausgebildet wird. Selbstverständlich ist es im Rahmen der Erfindung auch möglich, alternativ oder zusätzlich das Kurbelgehäuse oder andere tragende Bauteile der Brennkraftmaschine steifer auszubilden.

In Weiterbildung der Erfindung ist das Aggregat ein Generator. Gerade bei dieser Ausbildung beziehungsweise Kombination haben in der Regel Brennkraftmaschine und Generator erhebliche Ausmaße und Gewichte, so dass bei deren Kombination bisher immer ein Aggregaterahmen oder Träger notwendig war. Durch die nunmehr erfolgte Ausbildung als selbsttragende Einheit ist zwar zumindest die Brennkraftmaschine kräftiger beziehungsweise steifer zu dimensionieren und auszulegen, wobei hier aber die dadurch erfolgte Gewichtszunahme erheblich geringer ist als die durch die ansonsten notwendigen Aggregaterahmen oder Träger.

In Weiterbildung der Erfindung sind weitere Lager generatorseitig an der Brennkraftmaschine und/oder brennkraftmaschinenseitig an dem Generator angeordnet. Diese Lager werden je nach Bedarf eingesetzt beziehungsweise angebaut, so zum Beispiel wenn das Flächengewicht auf den Untergrund durch die endseitigen Lager zu hoch wird. Auch können diese Lager benutzt und eingesetzt werden, wenn der Generator beispielsweise zu Wartungs- oder Überholungszwecken abgebaut werden muß. Dann kann die Brennkraftmaschine beziehungsweise der Generator jeweils ohne weitere sonstigen (provisorischen) Unterstützungsmaßnahmen sicher abgestellt werden.

In Weiterbildung der Erfindung sind Lager an dem Kurbelgehäuse und/ oder der Ölwanne befestigbar. Dabei weist in weiterer Ausgestaltung ein Lager zwei Winkelstücke auf, die mit je einem ersten Schenkel aneinanderliegend eine Anlage für ein Dämpfungs- und Tragelement bilden und mit den zweiten Schenkeln an dem Kurbelgehäuse und der Ölwanne befestigbar sind. Allein durch diese erfindungsgemäße Ausgestaltung wird eine Erhöhung des Widerstandsmomentes auf den doppelten Wert gegenüber dem nur an dem Kurbelgehäuse befestigten Lager erreicht.

In Weiterbildung der Erfindung sind die aneinanderliegenden Schenkel angenähert in der Ebene der Trennfuge zwischen Kurbelgehäuse und Ölwanne angeordnet. Dadurch können die beiden Winkelstücke zumindest angenähert gleich gefertigt werden, was hinsichtlich des Fertigungsaufwandes und der Bauteilevielfalt von Vorteil ist.

In Weiterbildung der Erfindung ist der Generator direkt an der Brennkraftmaschine oder über eine Zwischenglocke an die Brennkraftmaschine angekoppelt. Dabei wird in Weiterbildung der Erfindung die Zwischenglocke insbesondere dann zum Einsatz kommen, wenn zwischen der Kurbelwelle und der Welle ein koaxiales Getriebe eingeschaltet ist.

In Weiterbildung der Erfindung ist der Generator und/oder die Zwischenglocke mit dem Kurbelgehäuse und der Ölwanne verschraubt. Diese Ausbildung bietet insbesondere dann Vorteile, wenn die Ölwanne als tragendes Element ausgebildet ist, da dann der kraftübertragende Bereich rings um die Kurbelwelle zumindest ähnlich steif ausgebildet ist, so daß sich hinsichtlich der Kraftverteilung überall ähnliche Verhältnisse einstellen.

In Weiterbildung der Erfindung ist die Kurbelwelle mit der Welle des Generators sowohl radial als auch axial starr und in Drehrichtung elastisch oder starr gekoppelt. Hier kann durch die entsprechende Wahl der Koppelung genau auf unterschiedliche Anforderungen bezüglich beispielsweise der Dämpfung von Drehschwingungen sowohl auf Seite der Brennkraftmaschine als auch auf Seite des Generators eingegangen werden.

Weitere vorteilhafte Ausgestaltungen der Erfindung sind der Zeichnungsbeschreibung zu entnehmen, in der in den Figuren dargestellte Ausführungsbeispiele der Erfindung näher beschrieben ist.

Es zeigen:
- Figur 1:: Eine Brennkraftmaschine, bei der der Generator direkt angeflanscht ist,
- Figur 2:: ein Ausführungsbeispiel, bei der der Generator über eine Zwischenglocke an der Brennkraftmaschine angeflanscht ist und
- Figur 3:: einen teilweisen Querschnitt durch das Kurbelgehäuse und die Ölwanne der Brennkraftmaschine mit der erfindungsgemäß ausgebildeten Lagerung.

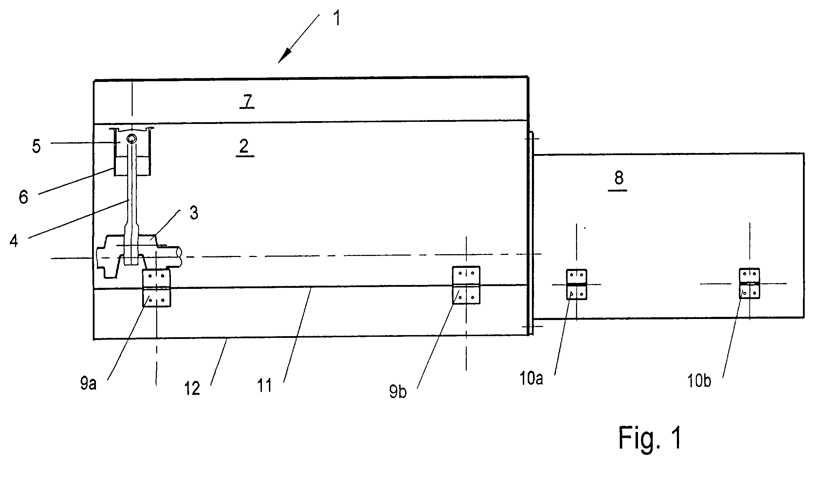

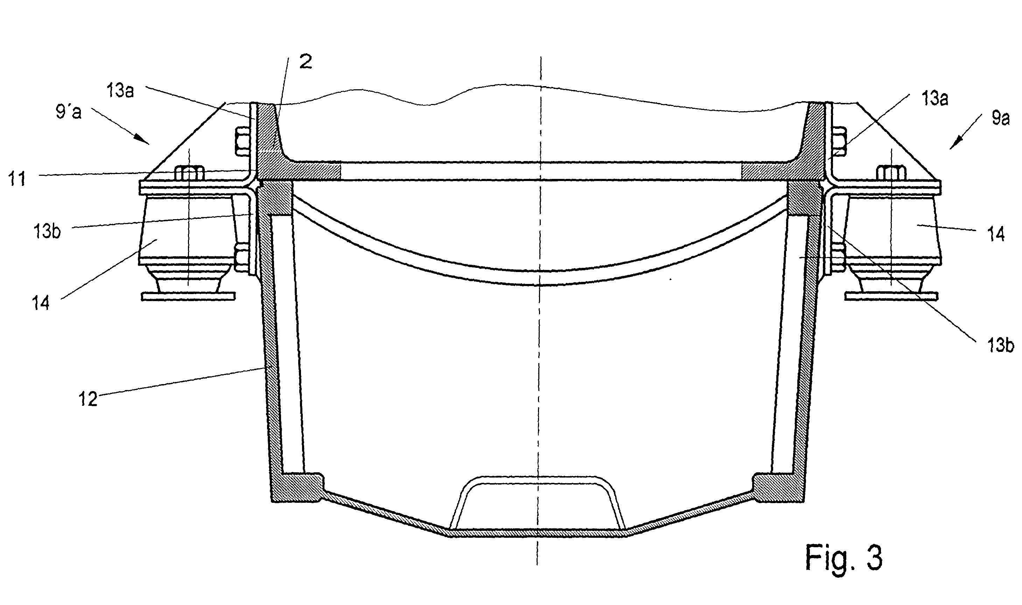

Die schematisch in Figur 1 dargestellte Brennkraftmaschine ist insbesondere eine selbstzündende Brennkraftmaschine in V-Bauart mit einer Zylinderleistung bis ca. 300 kW. Diese Brennkraftmaschine 1 weist ein Kurbelgehäuse 2 auf, in dem eine Kurbelwelle 3 drehbar gelagert ist. An diese Kurbelwelle 3 sind Pleuel 4 angelenkt, die jeweils einen Kolben 5 tragen. Die Kolben 5 gleiten in Zylindern 6, wobei die Zylinder von Zylinderköpfen 7 abgedeckt sind. An die Brennkraftmaschine 1 ist ein Aggregat, insbesondere ein Generator 8 angeflanscht. Dieser Generator 8 ist mit der Brennkraftmaschine im Bereich des Kurbelgehäuses 2 und der Ölwanne 12 verschraubt, wobei beide Bauelemente zusammen eine selbsttragende Einheit bilden. Gelagert ist die Einheit über Lager 9a, 9b, 9'a, 9'b, 10a, 10b, 10'a, 10'b. Dabei sind die Lager 9a, 9b, 9'a, 9'b an der Brennkraftmaschine 1 in Höhe der Trennfuge 11 zwischen Kurbelgehäuse 2 und Ölwanne 12 befestigt. Die Lager 9a, 9b, 9'a, 9'b weisen jeweils zwei Winkel 13a, 13b (Fig. 3) auf, die mit je einem Schenkel zusammenliegend die Auflage für ein Dämpfungs- und Tragelement 14 bilden. Die jeweils voneinander wegweisenden zweiten Schenkel der Winkel 13a, 13b sind mit dem Kurbelgehäuse 2 und der Ölwanne 12 verschraubt.

Je nach Ausbildung und Größe der Brennkraftmaschine 1 und des angeflanschten Generators 8 ruht das Gewicht dieser Baueinheit nur auf den Lagern 9a, 9'a und 10b, 10'b. Die Lager 9b, 9'b und 10a, 10'a können in diesem Falle wegbleiben oder nur zu Montagezwecken von der Brennkraftmaschine 1 und dem Generator 8 benutzt werden um diese alleine auf dem Untergrund abstellen zu können.

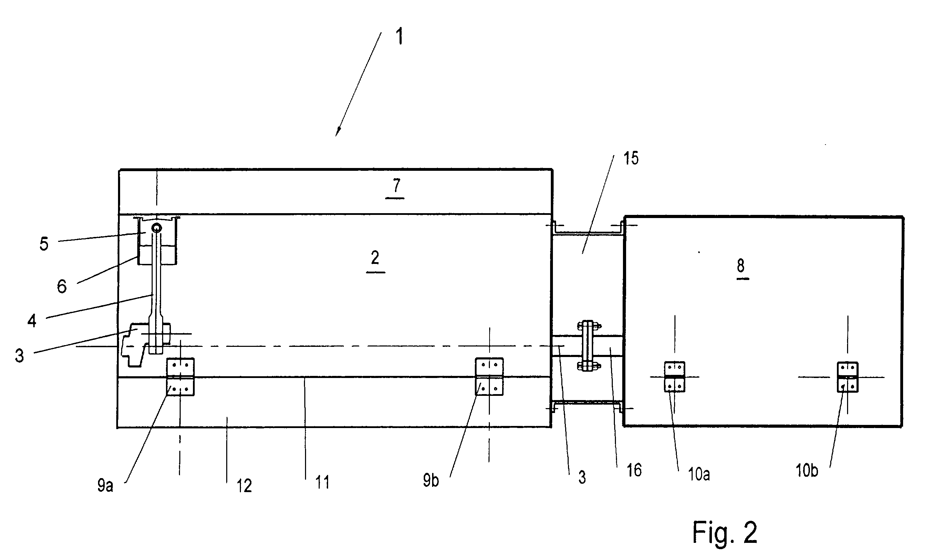

Im wesentlichen Unterschied zu der Ausbildung gemäß Figur 1 ist in der Ausführungsform nach Figur 2 der Generator unter Zwischenfügung einer Zwischenglocke 15 an der Brennkraftmaschine 1 angeflanscht. Auch bei dieser Ausführungsform ist es wesentlich, daß die gesamte Baueinheit eine selbsttragende Einheit bildet. Dabei ist in der Zwischenglocke 15 die Kurbelwelle 3 beziehungsweise ein daran befestigter Abtriebsflansch mit der Genertorwelle 16 verbunden. Dabei kann je nach Erfordernissen hier auch ein koaxiales Getriebe zwischengeschaltet sein.

## Patentansprüche

1. Brennkraftmaschine mit einem Aggregat, insbesondere selbstzündende Brennkraftmaschine (1), die ein Kurbelgehäuse (2) aufweist, in dem eine Kurbelwelle (3) drehbar gelagert ist, an der zumindest ein einen Kolben (5) tragendes Pleuel (4) angelenkt ist, wobei der Kolben (5) in einem von einem Zylinderkopf (7) abgedeckten Zylinder (6) bewegbar ist, wobei weiterhin das Kurbelgehäuse (2) kurbelwellenseitig von einer Ölwanne (12) verschlossen ist, und von der Kurbelwelle (3) das Aggregat angetrieben wird, wobei die Brennkraftmaschine (1) und das Aggregat über Lager auf einem Untergrund aufstellbar sind, wobei die Lager (9a, 9'a, 10b, 10'b) stirnseitig der Brennkraftmaschine (1) und endseitig dem Aggregat an deren voneinander wegweisenden Endbereichen angeordnet sind,
*dadurch gekennzeichnet*, dass die Brennkraftmaschine (1) und das Aggregat eine selbsttragende Einheit bilden, und dass die Ölwanne (12) als tragendes Element ausgebildet ist.

2. Brennkraftmaschine mit einem Aggregat nach Anspruch 1,
*dadurch gekennzeichnet,* dass das Aggregat ein Generator (8) ist.

3. Brennkraftmaschine mit einem Aggregat nach Anspruch 1 oder 2,
*dadurch gekennzeichnet,* dass Lager (9b, 9'b, 10a, 10'a) generatorseitig an der Brennkraftmaschine (1) und/oder brennkraftmaschinenseitig an dem Generator (8) angeordnet sind.

4. Brennkraftmaschine mit einem Aggregat nach Anspruch 3,
*dadurch gekennzeichnet,* dass die Lager (9b, 9'b, 10a, 10'a) generatorseitig der Brennkraftmaschine (1) und/oder brennkraftmaschinenseitig an dem Generator (8) als Traglager ausgebildet sind.

5. Brennkraftmaschine mit einem Aggregat nach einem der vorherigen Ansprüche,
*dadurch gekennzeichnet,* dass die Lager (9a, 9'a, 9b, 9'b) an dem Kurbelgehäuse (2) und/oder der Ölwanne (12) befestigbar sind.

6. Brennkraftmaschine mit einem Aggregat nach einem der vorherigen Ansprüche,
*dadurch gekennzeichnet,* dass je ein Lager (9a, 9'a, 9b, 9'b) zwei Winkel (13a, 13b) aufweist, die mit je einem ersten Schenkel aneinanderliegend eine Anlage für ein Dämpfungs- und Tragelement bilden und der jeweils zweite Schenkel an dem Kurbelgehäuse (2) beziehungsweise der Ölwanne (12) befestigbar ist.

7. Brennkraftmaschine mit einem Aggregat nach Anspruch 6,
*dadurch gekennzeichnet,* dass die aneinanderliegenden Schenkel angenähert in der Ebene der Trennfuge (11) zwischen Kurbelgehäuse (2) und Ölwanne (12) angeordnet sind.

8. Brennkraftmaschine mit einem Aggregat nach einem der vorherigen Ansprüche,
*dadurch gekennzeichnet,* dass der Generator (8) direkt an der Brennkraftmaschine (1) oder über eine Zwischenglocke (15) an die Brennkraftmaschine (1) angekoppelt ist.

9. Brennkraftmaschine mit einem Aggregat nach einem der vorherigen Ansprüche,
*dadurch gekennzeichnet,* dass zwischen der Kurbelwelle (3) und der Generatorwelle (16) ein koaxiales Getriebe eingeschaltet ist.

10. Brennkraftmaschine mit einem Aggregat nach einem der vorherigen Ansprüche,
*dadurch gekennzeichnet,* dass der Generator (8) und/oder die Zwischenglocke (15) mit dem Kurbelgehäuse (2) und der Ölwanne (12) verschraubt ist.

11. Brennkraftmaschine mit einem Aggregat nach einem der vorherigen Ansprüche,
*dadurch gekennzeichnet,* dass die Kurbelwelle (3) mit der Generatorwelle (16) sowohl radial als auch axial starr und in Drehrichtung elastisch oder starr gekoppelt ist.

## Claims

1. An internal combustion engine with a driven attached unit, especially a diesel engine (1), which has a crankcase (2), in which a crankshaft (3) is rotatably mounted, to which at least one connecting rod (4) carrying a piston (5) is linked, whereby the piston (5) is movable in a cylinder (6) covered by a cylinder head (7), and that, further, the crankcase (2) is enclosed on the crankshaft side by a sump (12) and the attached unit is driven by the crankshaft (3), so that the internal combustion engine (1) and the attached unit can be set up on a base via mountings, whereby the mountings (9a, 9'a, 10b, 10'b) are arranged at the front of the internal combustion engine (1) and at the rear end of the attached unit on their end regions at pointing away from each other,
*characterised in that* the internal combustion engine (1) and the attached unit form a self-supporting unit and that the sump (12) is formed as a bearing element.

2. An internal combustion engine with a driven attached unit according to Claim 1,
*characterised in that* the attached unit is a generator (8).

3. An internal combustion engine with a driven attached unit according to Claim 1 or Claim 2,
*characterised in that* mountings (9b, 9'b, 10a, 10'a) are arranged on the generator side to the internal combustion engine (1) and/or on the internal combustion engine side to the generator (8).

4. An internal combustion engine with a driven attached unit according to Claim 3,
*characterised in that* the mountings (9b, 9'b, 10a, 10'a) on the generator side of the internal combustion engine (1) and/or on the internal combustion engine side of the generator (8) are configured as supporting bearings.

5. An internal combustion engine with a driven attached unit according to any one of the preceding Claims,
*characterised in that* the mountings (9a, 9'a, 9b, 9'b) can be fastened to the crankcase (2) and/or to the sump (12).

6. An internal combustion engine with a driven attached unit according to any one of the preceding Claims,
*characterised in that* each of the mountings (9a, 9'a, 9b, 9'b) has two angle pieces (13a, 13b), of which a first arm in each case lying against the other forms a mounting for a damping and bearing element and the second arm of which can be fixed to the crankcase (2) or to the sump (12)

7. An internal combustion engine with a driven attached unit according to Claim 6,
*characterised in that* the arms lying against each other are arranged approximately at the level of the separating joint (11) between the crankcase (2) and the sump (12).

8. An internal combustion engine with a driven attached unit according to any one of the preceding Claims,
*characterised in that* the generator (8) is coupled directly to the internal combustion engine (1) or to the internal combustion engine (1) via an interposed bell housing (15).

9. An internal combustion engine with a driven attached unit according to any one of the preceding Claims,
*characterised in that* a coaxial gear box is connected between the crankshaft (3) and the generator shaft (16).

10. An internal combustion engine with a driven attached unit according to any one of the preceding Claims,
*characterised in that* the generator (8) and/or the interposed bell housing (15) is screwed to the crankcase (2) and the sump (12).

11. An internal combustion engine with a driven attached unit according to any one of the preceding Claims,
*characterised in that* the crankshaft (3) is coupled to the generator shaft rigidly both radially and axially and in the direction of rotation elastically or rigidly.

## Revendications

1. Moteur à combustion interne muni d'un équipement, notamment moteur à combustion interne à allumage non commandé (1), comportant un carter de vilebrequin (2) recevant à rotation un vilebrequin (3) et sur lequel est articulée au moins une bielle (4) munie d'un piston (5), dans lequel le piston (5) est mobile dans un cylindre (6) couvert par une culasse (7), le carter de vilebrequin (2) est fermé du côté du vilebrequin par une bâche à huile (12) et le vilebrequin (3) entraîne l'équipement, le moteur à combustion interne et l'équipement pouvant s'appuyer par l'intermédiaire de paliers sur une embase, et les paliers (9a, 9'a, 10b, 10'b) étant prévus dans des zones d'extrémité écartées l'une de l'autre, du côté frontal du moteur à combustion interne (1) et du côté de l'extrémité de l'équipement,
caractérisé en ce que
le moteur à combustion interne (1) et l'équipement constituent un ensemble autoporteur et la bâche à huile (12) est réalisée sous la forme d'élément porteur.

2. Moteur à combustion interne muni d'un équipement selon la revendication 1,
caractérisé en ce que
l'équipement est un générateur (8).

3. Moteur à combustion interne muni d'un équipement selon la revendication 1 ou 2,
caractérisé en ce que
des paliers (9b, 9'b, 10a, 10'a) sont prévus du côté du générateur sur le moteur à combustion interne (1) et/ou du côté du moteur à combustion interne sur le générateur (8).

4. Moteur à combustion interne muni d'un équipement selon la revendication 3,
caractérisé en ce que
les paliers (9b, 9'b, 10a, 10'a) sont réalisés comme des paliers de support du côté du générateur du moteur à combustion interne (1) et/ou du côté du moteur sur le générateur (8).

5. Moteur à combustion interne muni d'un équipement selon l'une quelconque des revendications précédentes,
caractérisé en ce que
les paliers (9a, 9'a, 9b, 9'b) sont fixés au carter de vilebrequin (2) et/ou à la bâche à huile (12).

6. Moteur à combustion interne muni d'un équipement selon l'une quelconque des revendications précédentes,
caractérisé en ce que
chaque palier (9a, 9'a, 9b, 9'b) présente deux angles (13a, 13b) qui forment un appui pour un élément de support et d'amortissement de façon adjacente avec une première branche, et leur seconde branche est fixée au carter de vilebrequin (2) ou à la bâche à huile (12).

7. Moteur à combustion interne muni d'un équipement selon la revendication 6,
caractérisé en ce que
les branches appliquées l'une contre l'autre sont prévues sensiblement dans le plan du joint (11) entre le carter de vilebrequin (2) et la bâche à huile (12).

8. Moteur à combustion interne muni d'un équipement selon l'une quelconque des revendications précédentes,
caractérisé en ce que
le générateur (8) est couplé directement au moteur à combustion interne (1) ou par une cloche intermédiaire (15) sur le moteur à combustion interne (1).

9. Moteur à combustion interne muni d'un équipement selon l'une quelconque des revendications précédentes,
caractérisé par
une transmission coaxiale branchée entre le vilebrequin (3) et l'axe (16) du générateur.

10. Moteur à combustion interne muni d'un équipement selon l'une quelconque des revendications précédentes,
caractérisé en ce que
le générateur (8) et/ou la cloche intermédiaire (15) sont vissés au carter de vilebrequin (2) et à la bâche à huile (12).

11. Moteur à combustion interne muni d'un équipement selon l'une quelconque des revendications précédentes,
caractérisé en ce que
le vilebrequin (3) est couplé à l'axe (16) du générateur, à la fois rigidement axialement et radialement et de manière élastique ou rigide dans leur sens de rotation.
